# EUROPÄISCHE PATENTSCHRIFT

(11) **EP 2 352 009 B1**
(45) Veröffentlichungstag und Bekanntmachung des Hinweises auf die Patenterteilung: **10.07.2013**
(21) Anmeldenummer: 11000513.9
(22) Anmeldetag: 22.01.2011
(51) Int. Cl.: G01N 19/02

(54) **Leichtkraftfahrzeug mit der Baugrösse etwa eines Personenwagens, das einen Bauraum zur Aufnahme einer Messeinrichtung zum Messen der Griffigkeit der Oberfläche der befahrenen Straße aufweist**
Light four-wheeled vehicle approximately the size of a passenger motor vehicle with a built-in space for a measuring device for measurement of the grip of the road surface
Véhicule automobile léger ayant la grandeur de structure d'environ un véhicule de transport de passagers, comprenant un espace de construction destiné à la réception d'un dispositif de mesure pour mesurer l'adhérence du revêtement routier

(30) Priorität: 02.02.2010 DE 202010001756 U
(43) Veröffentlichungstag der Anmeldung: 03.08.2011
(73) Patentinhaber: Institut für Baustoffe und Umwelt Lauta GmbH & Co. KG, 02991 Lauta (DE)
(72) Erfinder: Freiherr von Armin, Nicolas, 31319 Sehnde/OT Höver (DE)
(74) Vertreter: Jabbusch, Matthias

(56) Entgegenhaltungen:
- EP-A2- 2 048 489
- WO-A2-2007/106204
- DE-B1- 1 648 399
- DE-U1-202007 006 241
- US-A1- 2004 144 167

## Beschreibung

Die Erfindung betrifft ein Leichtkraftfahrzeug mit der Baugröße etwa eines Personenwagens, das einen Bauraum zur Aufnahme einer Messeinrichtung zum Messen der Griffigkeit der Oberfläche der befahrenen Straße aufweist, wobei in dem Bauraum in einer Hebelmechanik zumindest ein Messrad der Messeinrichtung in einem Winkel von etwa 20° zur Fahrzeuglängsmittelachse gehalten ist und wobei die Hebelmechanik vorzugsweise ein am Fahrzeugchassis angeschlagenes Lager sowie einen in diesem Lager schwenkbar gelagerten Tragarm für das Messrad aufweist.

Ein Leichtkraftfahrzeug dieser Gattung ist aus der DE 10 2007 048 764.0 bekannt. Mit dem dort beschriebenen Leichtkraftfahrzeug war es möglich, Griffigkeitsmessungen in engen Straßen durchzuführen. Die Griffigkeit der Fahrbahnoberfläche wird über das Messrad abgefragt, welches an einem Hebelarm gehalten ist.

Nach dem Stand der Technik wurden zur Umsetzung der auf das Messrad einwirkenden Kräfte Dehnmessstreifen eingesetzt.

Der Erfindung liegt die Aufgabe zu Grunde, ein Leichtkraftfahrzeug der eingangs genannten Gattung aufzuzeigen, das mit einer anderen Messeinrichtung ausgerüstet ist.

Diese Aufgabe ist erfindungsgemäß dadurch gelöst, dass die Achse des Messrades an zumindest eine Kraftmessdose kraftschlüssig angekoppelt ist, wobei die Achse des Messrades mit einer Axial-Kegelrolle kraftschlüssig verbunden ist und die Axial-Kegelrolle in einem Planetengetriebe gehalten ist.

Ein Leichtkraftfahrzeug gemäß dem Oberbegriff des Anspruchs 1 ist aus der Druckschrift EP 2 048 489 A2 bekannt. Weitere Griffigkeitsmesseinrichtungen dieser Art sind in den Dokumenten US 2004/144167 A1 und WO 2007/106204 A2 offenbart.

Bei dem erfindungsgemäßen Leichtkraftfahrzeug wird auf die Verwendung von Dehnmessstreifen verzichtet. Vielmehr wird die Achse des Messrades an eine Kraftmessdose gekoppelt. Die auf diese Weise übertragbaren Reibungskräfte bewirken eine höhere Genauigkeit. Hinzu kommt, dass durch ein Achslagerungssystem eine durch Verschleiß (Abnutzung) der Radachse sowie ein Warten (Kalibrieren) des Messsystems praktikable Lösung gegeben ist. Auch eine Justierung sowie weitere Einstellungen können einfach vorgenommen werden.

Die Axial-Kegelrolle dient der Kopplung von Messradachse und Kraftmessdose.

Durch das implementierte Planetengetriebe wird die Axial-Kegelrolle in Rotation versetzt. Dadurch ist sicher gestellt, dass eine Schmierung zu jedem Zeitpunkt erfolgen kann und möglichst wenig Reibung auftritt.

Zur weiteren Ausbildung der Erfindung kann noch vorgesehen sein, dass am Tragarm Sicherungs-Verriegelungselemente angeordnet sind. Diese Sicherungs-Verriegelungselemente dienen einer Festlegung des Tragarmes während des Transportes durch ein Verfahren des Leichtkraftfahrzeuges. Die Verriegelungselemente halten den Tragarm, beispielsweise auch dann, wenn bei einem pneumatischen System ein Druckluftverlust auftritt.

Der Tragarm ist an einem Leiterrahmen des Leichtkraftfahrzeuges so angesetzt worden, dass ein Überlasten der aus dem Stand der Technik bekannten Dehnmessstreifen nicht mehr auftreten kann. Nach der Erfindung wird eine in Achsrichtung stehende Kraftmessdose eingesetzt.

Ein Ausführungsbeispiel, aus dem sich weitere erfinderische Merkmale ergeben, ist in der Zeichnung dargestellt. Es zeigen:

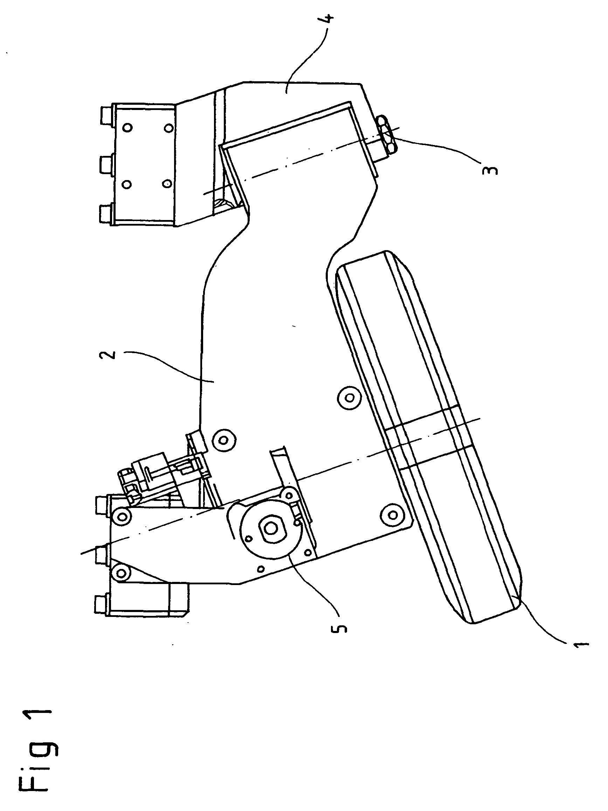

Fig. 1: eine Draufsicht auf ein Messrad eines Leichtkraftfahrzeuges, das in einer Messradhalterung aufgenommen ist,
Fig. 2: eine Seitenansicht von Bauteilen der Messradhalterung nach Fig. 1 und
Fig. 3: eine Schnittansicht der Messradhalterung nach Fig. 1.

Das Messrad 1 ist über einen Tragarm 2 an einem nicht weiter dargestellten Chassis eines Leichtkraftfahrzeuges angeordnet. Der Tragarm 2 ist über eine Tragarmachse 3 an einem Lagerblock 4 gehalten. Auf dem Tragarm 2 steht ein Arbeitszylinder 5 auf.

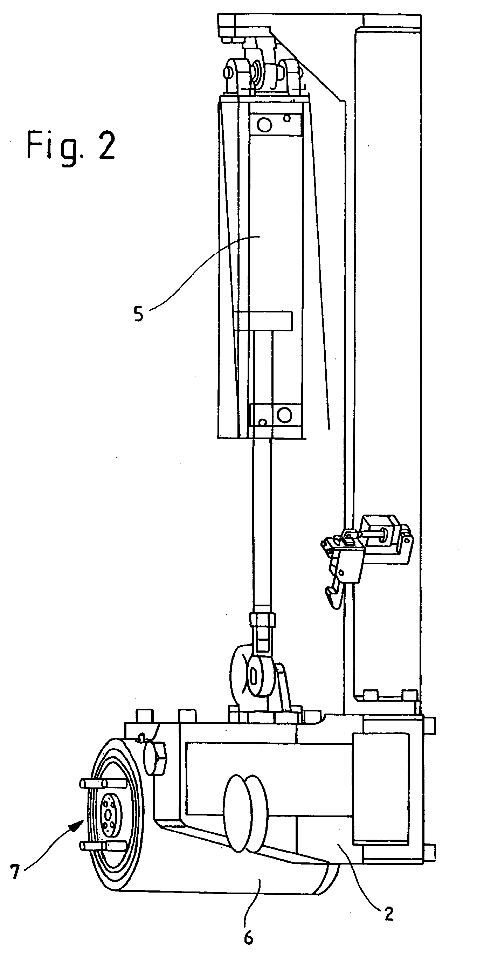

In Fig. 2 ist ein an dem Tragarm 2 angeordnetes Gehäuse 6 für die Radachse 7 des Messrades 1 dargestellt. An der Messradachse 7 sind Bolzen angeordnet, an denen das Messrad 1 mit Hilfe von Radmuttern befestigt werden kann.

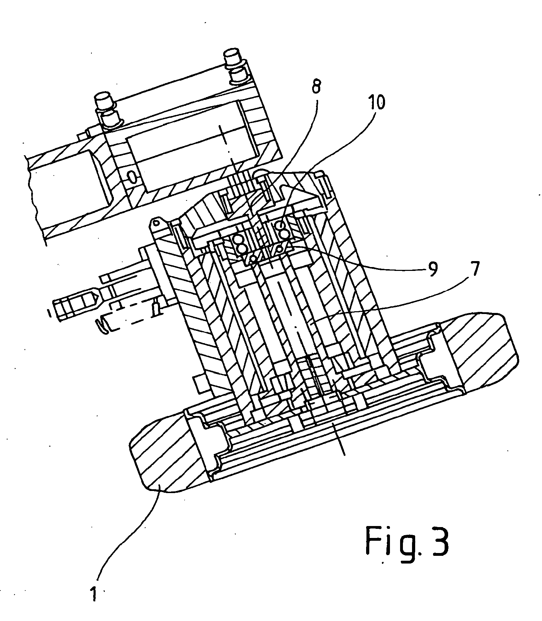

Die Messradachse 7 ist auch in Fig. 3 gezeigt. Aus dieser Fig. ist ersichtlich, dass die Messradachse 7 bis zu einer Kraftmessdose 8 geführt ist. Die Messradachse 7 ist an die Kraftmessdose 7 kraftschlüssig angekoppelt. Diese Kopplung erfolgt mit einer Axial-Kegelrolle 9, welche in einem Planetengetriebe 10 gelagert ist.

## Patentansprüche

1. Leichtkraftfahrzeug mit der Baugröße etwa eines Personenwagens, das einen Bauraum zur Aufnahme einer Messeinrichtung zum Messen der Griffigkeit der Oberfläche der befahrenen Straße aufweist, wobei in dem Bauraum in einer Hebelmechanik zumindest ein Messrad der Messeinrichtung in einem Winkel von etwa 20° zur Fahrzeuglängsmittelachse gehalten ist,
**dadurch gekennzeichnet,**
**dass** die Achse (7) des Messrades (1) an zumindest eine Kraftmessdose (8) kraftschlüssig angekoppelt ist, wobei die Achse (7) des Messrades (1) mit einer Axial-Kegelrolle (9) kraftschlüssig verbunden ist und die Axial-Kegelrolle (9) in einem Planetengetriebe (10) gehalten ist.

2. Leichtkraftfahrzeug nach Anspruch 1, **dadurch gekennzeichnet, dass** die Hebelmechanik ein am Fahrzeugchassis angeschlagenes Lager sowie einen in diesem Lager schwenkbar gelagerten Tragarm aufweist.

3. Leichtkraftfahrzeug nach einem der vorhergehenden Ansprüche, **dadurch gekennzeichnet, dass** am Tragarm (2) Sicherungsverriegelungselemente angeordnet sind.

## Claims

1. A light motor vehicle with the overall size approximately of a passenger car, which has an installation space to receive a measuring device for measuring the grip of the surface of the road which is being travelled on, wherein in the installation space in a lever mechanism at least one measuring wheel of the measuring device is held at an angle of approximately 20° to the longitudinal central axis of the vehicle,
**characterized in that**
the axis (7) of the measuring wheel (1) is coupled in a force-fitting manner to at least one load cell (8), wherein the axis (7) of the measuring wheel (1) is connected in a force-fitting manner with an axial tapered roller (9) and the axial tapered roller (9) is held in a planetary gearing (10).

2. The light motor vehicle according to Claim 1, **characterized in that** the lever mechanism has a bearing attached to the vehicle chassis, and a supporting arm pivotably mounted in this bearing.

3. The light motor vehicle according to one of the preceding claims, **characterized in that** security locking elements are arranged on the supporting arm (2).

## Revendications

1. Véhicule tout-terrain léger ayant les dimensions approximatives d'une voiture particulière, qui présente un espace de montage pour renfermer un dispositif de mesure pour mesurer la qualité antidérapante de la surface de la voie routière parcourue, dans lequel dans l'espace de montage dans une mécanique de levier au moins une roue-compteur du dispositif de mesure est maintenue à un angle d'approximativement 20° par rapport à l'axe central longitudinal du véhicule, **caractérisé en ce que** l'axe (7) de la roue-compteur (1) est couplé par conjonction de force à au moins une boîte dynamométrique, dans lequel l'axe (7) de la roue-compteur (1) est relié par conjonction de force avec un roulement conique axial (9) et le roulement conique axial (9) est maintenu dans une transmission planétaire (10).

2. Véhicule tout-terrain léger selon la revendication 1, **caractérisé en ce que** la mécanique de levier présente un palier calé sur le châssis du véhicule ainsi qu'un bras porteur positionné de manière pivotante dans ce palier.

3. Véhicule tout-terrain léger selon une des revendications précédentes, **caractérisé en ce que** des éléments de verrouillage de sécurité sont disposés sur le bras porteur (2).
